# EUROPÄISCHE PATENTSCHRIFT

(11) **EP 0 895 668 B1**
(45) Veröffentlichungstag und Bekanntmachung des Hinweises auf die Patenterteilung: **08.04.2009**
(21) Anmeldenummer: 97953616.6
(22) Anmeldetag: 05.12.1997
(51) Int. Cl.: H02K 15/02, H02K 1/28, H01R 39/16

(54) **LÄUFER UND VERFAHREN ZUR HERSTELLUNG EINES LÄUFERS**
ROTOR AND METHOD FOR PRODUCING SAME
ROTOR ET SON PROCEDE DE PRODUCTION

(30) Priorität: 21.02.1997 DE 19706851
(43) Veröffentlichungstag der Anmeldung: 10.02.1999
(73) Patentinhaber: ROBERT BOSCH GMBH, 70442 Stuttgart (DE)
(72) Erfinder: WIESLER, Martin, D-76534 Baden-Baden (DE); MALDENER, Klaus, D-77886 Lauf (DE); KIEFER, Martin, D-77704 Oberkirch (DE); FAUTH, Lothar, D-77815 Bühl (DE); KOBSCHÄTZKY, Hans, D-77871 Renchen (DE); KERN, Dieter, D-77830 Bühlertal (DE)
(86) Internationale Anmeldenummer: PCT/DE1997/002839
(87) Internationale Veröffentlichungsnummer: WO 1998/037613

(56) Entgegenhaltungen:
- EP-A- 0 365 233
- DE-A- 4 034 277
- DE-U- 8 625 147
- GB-A- 2 003 674
- US-A- 3 498 260
- US-A- 4 624 884
- US-A- 5 043 612

## Beschreibung

### Stand der Technik

Die Erfindung geht aus von einem Läufer bzw. einem Verfahren zur Herstellung eines Läufers nach der Gattung des Anspruches 1 bzw. des Anspruches 5.

Aus der EP-A-0 365 233 ist ein Läufer für einen Elektromotor bekannt, mit einer Läuferwelle, mit einem Läuferkern und mit einem Kommutator, die koaxial zu einer Längsachse angeordnet sind. Der Läuferkern hat Wicklungsschlitze mit einer darin angeordneten Läuferwicklung sowie eine dem Kommutator zugewandte erste Stirnfläche und eine dem Kommutator abgewandte zweite Stirnfläche.

Die Läuferwelle hat einen zwischen Läuferkern und Kommutator liegenden ersten Abschnitt und einen von der zweiten Stirnfläche des Läuferkerns ausgehenden und dem Kommutator abgewandten zweiten Abschnitt. Der Kommutator hat eine dem Läuferkern zugewandte Verbindungsstirnfläche sowie eine zur Längsachse koaxiale Innenbohrung. Die Wicklungsschlitze, die erste Stirnfläche und die zweite Stirnfläche des Läuferkerns sowie der erste Abschnitt sind mit einem aufgesprühten Epoxidharz bedeckt. Der Kommutator hat an seiner Verbindungsstirnfläche eine Vertiefung und ausgehend von der Verbindungsstirnfläche wenigstens eine sich in Richtung der Längsachse zur Innenbohrung hin erstreckende Ausnehmung. Das Epoxidharz greift zur Fixierung des Kommutators in die Vertiefung und die wenigstens eine Ausnehmung ein.

In der US 5,043,612 ist ein Verfahren zur Beschichtung eines Stators mit einer gesinterten Epoxidschicht offenbart.

Es ist weiterhin bereits ein Läufer bekannt (DE 37 28 000 C2), bei dem der Läuferkerns jeweils stirnseitig von einer Endscheibe abgedeckt wird, die an ihrer dem Läuferkern zugewandten Fläche und zur Läuferwelle hin Strömungskanäle aufweist, in die ein Wicklungs-Imprägnier-Mittel einführbar ist, das nach dem Aushärten als zusätzlich wirkendes Verfestigungsmittel dient.

### Vorteile der Erfindung

Der erfindungsgemäße Läufer bzw. das erfindungsgemäße Verfahren zur Herstellung eines Läufers mit den kennzeichnenden Merkmalen des Anspruches 1 bzw. des Anspruches 5 hat den Vorteil, dass auf einfache Art und Weise eine Fixierung des Kommutators mittels des an der Läuferwelle und dem Läuferkern aufgebrachten Isoliermittels (Beschichtungspulver auf Epoxidbasis) möglich ist. Hiefür ist die Innenbohrung des Kommutators mit einer Spielpassung zur Läuferwelle gefertigt, wodurch der Kommutator bei der Montage leichtgängig auf die Läuferwelle aufgeschoben werden kann und eine Beschädigung der Oberfläche der Läuferwelle sowie innere Spannungen im Kommutator vermieden werden, denn bei der beim Stand der Technik üblichen Ausbildung der Innenbohrung des Kommutators mit einer Preßpassung gegenüber der Läuferwelle besteht die Gefahr des Zerkratzens der Oberfläche der Läuferwelle. Die aufgebrachte Isolierschicht erhöht außerdem die axialen Haltekräfte des in der Regel aus Blechlamellen aufgebauten Läuferkerns an der Läuferwelle, d. h., der Läuferkern wird durch die Isolierschicht zusätzlich mechanisch gehalten.

Durch die in den abhängigen Ansprüchen aufgeführten Maßnahmen sind vorteilhafte Weiterbildungen und Verbesserungen des im Anspruch 1 angegebenen Läufers bzw. des im Anspruch 5 angegebenen Verfahrens möglich. Vorteilhaft ist es, die wenigstens eine Ausnehmung des Kommutators als sich von der Verbindungsstirnfläche zur Innenbohrung hin verjüngende Konusfläche auszubilden, wodurch ein leichteres Eindringen des plastifizierten Epoxids zwischen die Innenbohrung des Kommutators und die Läuferwelle möglich ist, was zu einer Verbesserung der Fixierung des Kommutators auf der Läuferwelle führt.

Vorteilhaft ist es ebenfalls, die Läuferwicklung sowie die von der Läuferwicklung zum Kommutator führenden und mit diesem verbundenen Anschlußdrähte mit einer zweiten gesinterten Epoxidschicht zu bedecken, wodurch nicht nur ein Schutz gegen Beschädigung und aggressive Medien gegeben ist, sondern auch eine zusätzliche Fixierung der Läuferwicklung erfolgt, durch die Brüche infolge von Schwingungen verhindert werden.

### Zeichnung

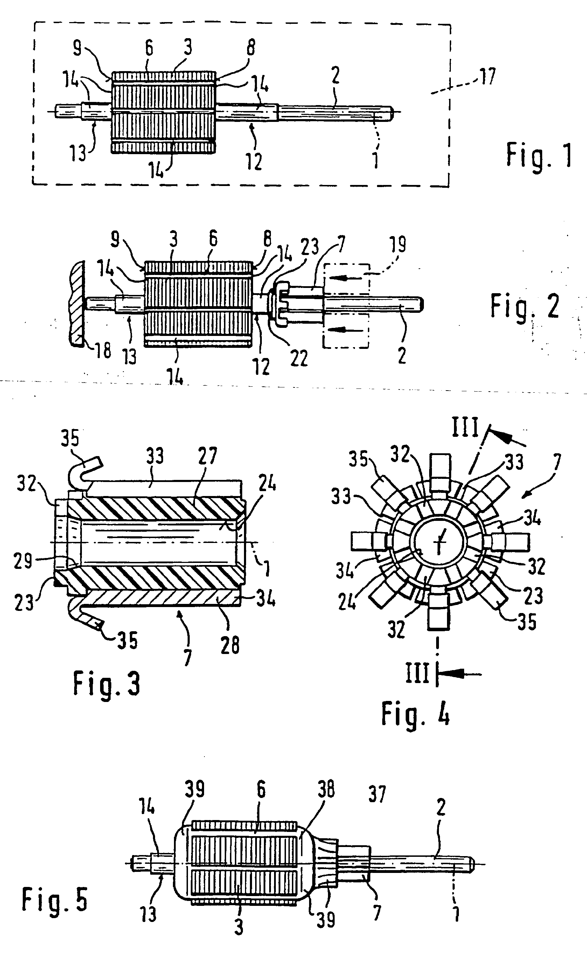

Ein Ausführungsbeispiel der Erfindung ist in der Zeichnung vereinfacht dargestellt und in der nachfolgenden Beschreibung näher erläutert. Es zeigen Figur 1 einen Läufer mit einer Epoxidschicht, Figur 2 einen Läufer mit einem auf die Läuferwelle geschobenen Kommutator, Figur 3 einen Kommutator im Längsschnitt gemäß einem Schnitt entlang der Linie III-III in Figur 4, Figur 4 einen Kommutator gemäß Figur 3 in Seitenansicht, Figur 5 einen Läufer mit einer zweiten Epoxidschicht.

### Beschreibung des Ausführungsbeispieles

In der Figur 1 ist ein Läufer für einen Elektromotor dargestellt, mit einer Längsachse 1, mit einer koaxial dazu verlaufenden Läuferwelle 2 und mit einem koaxial auf die Läuferwelle 2 mit Preßsitz aufgeschobenen Läuferkern 3. Der Läuferkern 3 ist in bekannter Weise aus einzelnen Blechlamellen paketiert und weist mehrere parallel zur Längsachse 1 verlaufende Wicklungsschlitze 6 auf, die sich, wie in Figur 2 dargestellt ist, von einer einem Kommutator 7 zugewandten ersten Stirnfläche 8 bis zu einer dem Kommutator 7 abgewandten zweiten Stirnfläche 9 des Läuferkerns 3 erstrecken. Die Wicklungsschlitze 6, die erste Stirnfläche 8 sowie die zweite Stirnfläche 9 des Läuferkerns 3 und ein zwischen Läuferkern 3 und Kommutator 7 liegender erster Abschnitt 12 der Läuferwelle 2 sowie ein dem Kommutator 7 abgewandter und sich an den Läuferkern 3 anschließender zweiter Abschnitt 13 der Läuferwelle 2 sind mit einer gesinterten Epoxidschicht 14 bedeckt. Hierfür wird der Läufer ohne Kommutator in den Bereichen der Läuferwelle 2 und des Läuferkerns 3, die nicht mit einer Epoxidschicht 14 versehen werden sollen, mit Masken abgedeckt und der so ausgestattete Läufer wird in eine gestrichelt angedeutete Beschichtungsanlage 17 eingeführt, in der elektrostatisch geladenes Epoxidpulver in einem Pulverwirbelbad sich an den nicht durch Masken abgedeckten Bereichen der Läuferwelle 2 und des Läuferkerns 3 anlagert, so daß die Abschnitte 12 und 13 der Läuferwelle 2 sowie die erste Stirnfläche 8, die zweite Stirnfläche 9 und die Wicklungsschlitze 6 des Läuferkerns 3 mit einer Schicht aus Epoxidpulver bedeckt sind. Bedeckt wird auch der äußere Mantel des Läuferkerns 3. Diese Pulverschicht auf dem äußeren Mantel des Läuferkerns wird in einem Folgearbeitsgang mittels Blasen, Saugen oder Abstreifen entfernt, so daß der äußere Mantel pulverfrei ist. Danach wird die Temperatur in der Beschichtungsanlage 17 so lange erhöht, bis das Epoxidpulver auf seine Plastifizier- und Aushärtetemperatur erwärmt ist, die etwa bei 240°C liegt und bei der das Epoxidpulver zu einer zähflüssigen Masse wird. In diesem Zustand wird auf die nahe ihres zweiten Abschnittes 13 an einem Halteanschlag 18 anliegende Läuferwelle 2 der Kommutator 7 mittels eines strichpunktiert dargestellten Schiebewerkzeuges 19 derart aufgeschoben, daß die auf dem ersten Abschnitt 12 der Läuferwelle 2 vorliegende zähflüssige Epoxidschicht 14 sich zum Teil in Form einer Wulst 22 an einer Verbindungsstirnfläche 23 des Kommutators 7 radial nach außen wölbt und in einen zwischen dem Umfang der Läuferwelle 2 und der Wandung einer Innenbohrung 24 (siehe Figuren 3 und 4) gebildeten Ringspalt eindringt. Nach dem Aushärten des Epoxids und dem Abkühlen des Läufers ist der Kommutator 7 ausschließlich durch das Epoxid 14 an der Läuferwelle 2 in axialer Richtung fixiert und gegen Verdrehen gesichert. Wie in den Figuren 3 und 4 dargestellt ist, weist der Kommutator 7 einen Kommutatorkern 27 aus einem Duroplast auf, der von einer metallenen Leiterhülse 28, insbesondere aus Kupfer gefertigt, umgeben ist. In dem Kommutatorkern 27 verläuft die Innenbohrung 24, die gegenüber dem Umfang der Läuferwelle 2 eine Spielpassung aufweist.

Von der Verbindungsstirnfläche 23 ausgehend weist der Kommutator 7 eine sich in Richtung der Längsachse zur Innenbohrung hin erstreckende Ausnehmung 29 auf, die in Figur 3 als sich zur Innenbohrung 24 hin verjüngende Konusfläche 29 dargestellt ist. Die Ausnehmung 29 kann aber auch als zur Innenbohrung 24 führende Längsnut ausgebildet sein. Die Ausnehmung, beispielsweise in Form der sich zur Innenbohrung 24 hin verjüngenden Konusfläche 29 ermöglicht ein leichtes und gleichmäßiges Eindringen des zähflüssigen Epoxids in den zwischen der Läuferwelle 2 und der Innenbohrung 24 gebildeten Ringspalt. Zur besseren Fixierung des Kommutators 7 in Drehrichtung sind an der Verbindungsstirnfläche 23 des Kommutators 7 Vertiefungen 32 im Kommutatorkern 27 vorgesehen, die beispielsweise von der Ausnehmung 29 ausgehen und sich bis zum Umfang des Kommutatorkerns 27 erstrecken. Der Querschnitt der Vertiefungen 32 kann dabei rechteckförmig, dreieckförmig, halbrund oder ähnlich sein. Die Wulst 22 des Epoxids 14 überdeckt in radialer Richtung die Vertiefungen 32 und verkrallt sich darin. In Richtung der Längsachse verlaufende Kommutatorschlitze 33 durchtrennen die Leiterhülse 28 in elektrisch gegeneinander isolierte einzelne Segmente 34, die der Verbindungsstirnfläche 23 zugewandt je einen Verbindungshaken 35 besitzen. Mit jedem Verbindungshaken 35 ist ein Verbindungsdraht 37 der in Figur 5 dargestellten Läuferwicklung 38 durch Verklemmen elektrisch verbunden. Nach dem Einfügen der Läuferwicklung 38 in die Wicklungsschlitze 6 des Läuferkerns 3 sowie dem Verbinden der Verbindungsdrähte 37 mit den Verbindungshaken 35 des Kommutators 7 wird der Läufer erneut in die Beschichtungsanlage 17 eingebracht und elektrostatisch erneut mit Epoxidpulver auf der Läuferwicklung 38 und den Verbindungsdrähten 37 pulverbeschichtet und anschließend auf die Plastifizier- und Aushärtetemperatur erwärmt, wodurch eine zweite Epoxidschicht 39 aufgesintert wird, die die Läuferwicklung 38 und die Verbindungsdrähte 37 bedeckt und damit fixiert, wodurch die Schüttelfestigkeit sowie der Schutz vor aggressiven Medien verbessert werden. Dabei lagert sich natürlich die zweite Epoxidschicht 39 auch an dem ersten Abschnitt 12 der Läuferwelle 2 und der Verbindungsstirnfläche 23 sowie den Verbindungshaken 35 des Kommutators 7 an.

## Patentansprüche

1. Läufer für einen Elektromotor, mit einer Läuferwelle, mit einem Läuferkern und mit einem Kommutator, die koaxial zu einer Längsachse angeordnet sind, wobei der Läuferkern Wicklungsschlitze mit wenigstens einer darin angeordneten Läuferwicklung sowie eine dem Kommutator zugewandte erste Stirnfläche und eine dem Kommutator abgewandte zweite Stirnfläche, die Läuferwelle einen zwischen Läuferkern und Kommutator liegenden ersten Abschnitt und einen von der zweiten Stirnfläche des Läuferkerns ausgehenden und dem Kommutator abgewandten zweiten Abschnitt und der Kommutator eine dem Läuferkern zugewandte Verbindungsstirnfläche sowie eine zur Längsachse koaxiale Innenbohrung hat, wobei die Wicklungsschlitze (6), die erste Stirnfläche (8) und die zweite Stirnfläche (9) des Läuferkerns (3) sowie der erste Abschnitt (12) und der zweite Abschnitt (13) der Läuferwelle (2) mit einer ersten gesinterten Epoxidschicht (14) bedeckt sind, und der Kommutator (7) an seiner Verbindungsstirnfläche (23) wenigstens eine Vertiefung (32) und ausgehend von der Verbindungsstirnfläche (23) wenigstens eine sich in Richtung der Längsachse (1) zur Innenbohrung (24) hin erstreckende Ausnehmung (29) hat und die erste gesinterte Epoxidschicht (14) zur Fixierung des Kommutators (7) in die wenigstens eine Vertiefung (32) und die wenigstens eine Ausnehmung (29) eingreift, **dadurch gekennzeichnet, dass** die Innenbohrung (24) des Kommutators (7) gegenuber dem Umfang der Läuferwelle (2) eine Spielpassung aufweist, und ein Teil der Epoxidschicht (14) in einen zwischen dem Umfang der Läuferwelle (2) und der Wandung der Innenbohrung (24) gebildeten Ringspalt eindringt.

2. Läufer nach Anspruch 1, wobei die wenigstens eine Ausnehmung (29) des Kommutators (7) als sich von der Verbindungsstirnfläche (23) zur Innenbohrung (24) hin verjüngende Konusfläche (29) ausgebildet ist.

3. Läufer nach Anspruch 1 oder 2, wobei die Läuferwicklung (38) sowie die von der Läuferwicklung (38) zum Kommutator (7) führenden und mit diesem verbundenen Verbindungsdrähte (37) mit einer zweiten gesinterten Epoxidschicht (39) bedeckt sind.

4. Läufer nach einem der Ansprüche 1 bis 3, wobei eine Wulst (22) der Epoxidschicht (14) in radialer Richtung die Vertiefungen (32) überdeckt und sich darin verkrallt.

5. Verfahren zur Herstellung eines Läufers für einen Elektromotor, der koaxial zu einer Läuferachse angeordnet eine Läuferwelle, einen Läuferkern und einen Kommutator aufweist, wobei der Läuferkern Wicklungsschlitze für wenigstens eine darin anordenbare Läuferwicklung sowie eine dem Kommutator zugewandte erste Stirnfläche und eine dem Kommutator abgewandte zweite Stirnfläche, die Läuferwelle einen zwischen Läuferkern und Kommutator liegenden ersten Abschnitt und einen von der zweiten Stirnfläche des Läuferkerns ausgehenden und dem Kommutator abgewandten zweiten Abschnitt und der Kommutator eine dem Läuferkern zugewandte Verbindungsstirnfläche sowie eine zur Längsachse koaxiale Innenbohrung hat, **dadurch gekennzeichnet, dass** zwischen der Innenbohrung (24) des Kommutators (7) und dem Umfang der Läuferwelle (2) eine Spielpassung ausgebildet wird, und dass nach dem Aufpressen des Läuferkerns (3) auf die Läuferwelle (2) der erste (12) und der zweite Abschnitt (13) der Läuferwelle (2) sowie die erste Stirnfläche (8), die zweite Stirnfläche (9) und die Wicklungsschlitze (6) des Läuferkerns (3) elektrostatisch mit Epoxidpulver (14) pulverbeschichtet werden, danach das Epoxidpulver (14) auf seine Plastifizier- und Aushärtetemperatur erwärmt wird und danach der Kommutator (7) auf die Läuferwelle (2) in seine Endlage geschoben wird, wobei ein Teil des plastifizierten Epoxids (14) von dem ersten Abschnitt (12) verschoben wird und sich an der Verbindungsstirnfläche (23) anlegt, und ein Teil der Epoxidschicht (14) in einen zwischen dem Umfang der Läuferwelle (2) und der Wandung der Innenbohrung (24) gebildeten Ringspalt eindringt.

6. Verfahren nach Anspruch 6 , wobei nach dem Einfügen der wenigstens einen Läuferwicklung (38) in die Wicklungsschlitze (6) des Läuferkerns (3) die Läuferwicklung (38), die von der Läuferwicklung (38) zum Kommutator (7) führenden und mit diesem verbundenen Verbindungsdrähte (37) sowie die Verbindungsstirnfläche (23) des Kommutators (7) elektrostatisch mit Epoxidpulver (39) pulverbeschichtet werden und danach das Epoxidpulver (39) auf seine Plastifizier- und Aushärtetemperatur erwärmt wird.

7. Verfahren nach einem der Ansprüche 5 oder 6, wobei eine Wulst (22) der Epoxidschicht (14) in radialer Richtung die Vertiefungen (32) überdeckt und sich darin verkrallt.

## Claims

1. Rotor for an electric motor, having a rotor shaft, having a rotor core and having a commutator, which are arranged coaxially with respect to a longitudinal axis, the rotor core having winding slots having at least one rotor winding arranged therein and a first front face, which faces the commutator, and a second front face, which is remote from the commutator, the rotor shaft having a first section, which is positioned between the rotor core and the commutator, and a second section, which starts from the second front face of the rotor core and is remote from the commutator, and the commutator having a front connection face, which faces the rotor core, and an inner hole, which is coaxial with respect to the longitudinal axis, the winding slots (6), the first front face (8) and the second front face (9) of the rotor core (3) and the first section (12) and the second section (13) of the rotor shaft (2) being covered by a first sintered epoxy layer (14), and the commutator (7) on its front connection face (23) having at least one depression (32) and, starting from the front connection face (23), at least one cutout (29), which extends in the direction of the longitudinal axis (1) towards the inner hole (24), and the first sintered epoxy layer (14) engaging in the at least one depression (32) and the at least one cutout (29) so as to fix the commutator (7), **characterized in that** the inner hole (24) of the commutator (7) has a clearance fit with respect to the circumference of the rotor shaft (2), and some of the epoxy layer (14) enters an annular gap formed between the circumference of the rotor shaft (2) and the wall of the inner hole (24).

2. Rotor according to Claim 1, the at least one cutout (29) of the commutator (7) being in the form of a cone face (29), which tapers from the front connection face (23) towards the inner hole (24).

3. Rotor according to Claim 1 or 2, the rotor winding (38) and the connecting wires (37), which pass from the rotor winding (38) to the commutator (7) and are connected to said commutator, being covered by a second sintered epoxy layer (39).

4. Rotor according to one of Claims 1 to 3, a bead (22) of the epoxy layer (14) covering the depressions (32) in the radial direction and digging into them.

5. Method for producing a rotor for an electric motor, which has, arranged coaxially with respect to a rotor axis, a rotor shaft, a rotor core and a commutator, the rotor core having winding slots for at least one rotor winding, which can be arranged therein, and a first front face, which faces the commutator, and a second front face, which is remote from the commutator, the rotor shaft having a first section, which is positioned between the rotor core and the commutator, and a second section, which starts from the second front face of the rotor core and is remote from the commutator, and the commutator having a front connection face, which faces the rotor core, and an inner hole, which is coaxial with respect to the longitudinal axis, **characterized in that** a clearance fit is formed between the inner hole (24) of the commutator (7) and the circumference of the rotor shaft (2), and **in that**, once the rotor core (3) has been pressed onto the rotor shaft (2), the first section (12) and the second section (13) of the rotor shaft (2) and the first front face (8), the second front face (9) and the winding slots (6) of the rotor core (3) are electrostatically powder-coated with epoxy powder (14), then the epoxy powder (14) is heated to its plastification and curing temperature and then the commutator (7) is pushed onto the rotor shaft (2) into its final position, some of the plastified epoxy (14) being displaced by the first section (12) and being applied to the front connection face (23), and some of the epoxy layer (14) entering an annular gap formed between the circumference of the rotor shaft (2) and the wall of the inner hole (24).

6. Method according to Claim 6, once the at least one rotor winding (38) has been inserted into the winding slots (6) of the rotor core (3), the rotor winding (38) the connecting wires (37), which pass from the rotor winding (38) to the commutator (7) and are connected to said commutator, and the front connection face (23) of the commutator (7) being electrostatically powder-coated with epoxy powder (39) and then the epoxy powder (39) being heated to its plastification and curing temperature.

7. Method according to either of Claims 5 and 6, a bead (22) of the epoxy layer (14) covering the depressions (32) in the radial direction and digging into them.

## Revendications

1. Rotor pour un moteur électrique, avec un arbre de rotor, un noyau de rotor et avec un commutateur, disposés coaxialement par rapport à un axe longitudinal, dont le noyau de rotor possède des fentes de bobinage logeant au moins un enroulement de rotor, ainsi qu'une première face frontale tournée vers le commutateur et une deuxième face frontale éloignée du commutateur, dont l'arbre de rotor ayant un premier segment situé entre le noyau de rotor et le commutateur et un deuxième segment partant de la deuxième face frontale du noyau de rotor et éloignée du commutateur, ce commutateur ayant une face frontale de liaison tournée vers le noyau de rotor ainsi qu'un perçage intérieur coaxial par rapport à l'axe longitudinal, les fentes de bobinage (6), la première face frontale (8) et la deuxième face frontale (9) du noyau de rotor (3) ainsi que le premier segment (12) et le deuxième segment (13) de l'arbre de rotor (2) étant recouverts d'une première couche d'époxy frittée (14), alors que le commutateur (7) présente au moins un évidement (32) sur sa face frontale de liaison (23) et, partant de la face frontale de liaison (23), au moins un évidement (29) s'étendant dans la direction de l'axe longitudinal (1) par rapport au perçage intérieur (24), la première couche d'époxy frittée (14) pour la fixation du commutateur (7) pénétrant dans les évidements (32, 29),
**caractérisé en ce que**
le perçage intérieur (24) du commutateur (7) présente un ajustement avec jeu vis-à-vis de la périphérie de l'arbre de rotor (2), et une partie de la couche d'époxy (14) pénètre dans une fente annulaire formée entre la périphérie de l'arbre de rotor (2) et la paroi du perçage intérieur (24).

2. Rotor selon la revendication 1,
dans lequel l'évidement (29) du commutateur est en forme de face conique (29) allant en se rétrécissant de la face frontale de liaison (23) jusqu'au perçage intérieur (24).

3. Rotor selon la revendication 1 ou 2,
dans lequel l'enroulement de rotor (38) ainsi que les fils de liaison (37) conduisant au commutateur (7) auquel ils sont reliés sont recouverts d'une deuxième couche d'époxy frittée (39).

4. Rotor selon l'une des revendications 1 à 3,
dans lequel un bourrelet (22) de la couche d'époxy (14) recouvre dans la direction radiale les évidements (32) dans lesquels il s'accroche.

5. Procédé de production d'un rotor pour un moteur électrique qui possède un arbre de rotor à disposition coaxiale par rapport à l'axe du rotor, un noyau de rotor et un commutateur, dont le noyau de rotor possède des fentes de bobinage pour contenir au moins un enroulement de rotor, ainsi qu'une première face frontale tournée vers le commutateur et une deuxième face frontale éloignée du commutateur, l'arbre de rotor ayant un premier segment situé entre le noyau de rotor et le commutateur et un deuxième segment partant de la deuxième face frontale du noyau de rotor et éloignée du commutateur, ce commutateur ayant une face frontale de liaison tournée vers le noyau de rotor ainsi qu'un perçage intérieur coaxial par rapport à l'axe longitudinal,
**caractérisé en ce qu'**
un ajustement avec jeu est formé entre le perçage intérieur (24) du commutateur (7) et la périphérie de l'arbre de rotor (2), et après l'engagement par pression du noyau de rotor (3) sur l'arbre de rotor (2), les premier (12) et deuxième segments (13) de l'arbre de rotor (2) ainsi que la première face frontale (8), la deuxième face frontale (9) et les fentes de bobinage (6) du noyau de rotor (3) sont revêtus de poudre d'époxy (14) par procédé électrostatique, puis la poudre d'époxy (14) est chauffée à sa température de plastification et de durcissement, puis le commutateur (7) est poussé sur l'arbre de rotor (2) dans sa position finale, une partie de l'époxy plastifiée (14) est déplacée par le premier segment (12) et se dépose sur la face frontale de liaison (23), et une partie de la couche d'époxy (14) pénètre dans une fente annulaire formée entre la périphérie de l'arbre de rotor (2) et la paroi du perçage intérieur (24).

6. Procédé selon la revendication 5,
selon lequel après l'introduction de l'enroulement de rotor (38) dans les fentes de bobinage (6) du noyau de rotor (3), l'enroulement de rotor (38), les fils de liaison (37) conduisant au commutateur (7) auquel ils sont reliés, ainsi que la face frontale de liaison (23) du commutateur (7) sont revêtus de poudre d'époxy (39) par procédé électrostatique, puis la poudre d'époxy (39) est chauffée à sa température de plastification et de durcissement.

7. Procédé selon l'une des revendications 5 ou 6,
selon lequel un bourrelet (22) de la couche d'époxy (14) recouvre dans la direction radiale les évidements (32) dans lesquels il s'accroche.
